# EUROPÄISCHE PATENTANMELDUNG

(11) **EP 1 046 549 A2**
(43) Veröffentlichungstag der Anmeldung: **25.10.2000**
(21) Anmeldenummer: 00108009.2
(22) Anmeldetag: 19.04.2000
(51) Int. Cl.: B60R 21/16

(54) **Faltverfahren für einen Luftsack**

(30) Priorität: 23.04.1999 DE 19918584
(71) Anmelder: TRW Automotive Safety Systems GmbH & Co. KG, 63743 Aschaffenburg (DE)
(72) Erfinder: Weis, Andreas, 63739 Aschaffenburg (DE)
(74) Vertreter: Sties, Jochen, Dipl.-Ing.

(57) **Zusammenfassung**

Zum Falten eines Luftsacks für ein im Lenkrad eines Kraftfahrzeuges angeordnetes Airbag-Modul wird ein Verfahren vorgeschlagen, bei dem der aus zwei etwa kreisförmigen, randseitig miteinander verbundenen Gewebeabschnitten (1,2) bestehende Luftsack, der in der Mitte eines Gewebeabschnitts eine Gaseinlaß- und Montageöffnung (3) mit Halteblech (4) aufweist an ein von einem topfartigen Unterteil und einem deckelartigen Oberteil begrenztes Aufnahmevolumen angepaßt werden kann.

Das Verfahren ist gekennzeichnet durch folgende Schritte:
(1) die beiden kreisförmigen Gewebeabschnitte werden flach übereinanderliegend so ausgebreitet, daß sie in einer Ebene parallel zum Halteblech liegen,
(2) die links und rechts von einer Mittellinie liegenden Hälften der übereinanderliegenden Gewebeabschnitte werden längs parallel zur Mittellinie verlaufender Faltlinien zu zwei auf der der Gaseinlaßöffnung gegenüberliegenden Seite angeordneten, langgestreckten, unmittelbar nebeneinander liegenden Paketen aufgefaltet, deren einzelne Faltlagen im wesentlichen die gleiche Höhe aufweisen und senkrecht zum Halteblech angeordnet sind,
(3) die beiden langgestreckten Pakete werden um senkrecht zum Halteblech verlaufende Achsen durch Falten und/oder Wickeln an das Aufnahmevolumen angepaßt.

## Beschreibung

Die Erfindung betrifft ein Verfahren zum Falten eines Luftsacks für ein im Lenkrad eines Kraftfahrzeuges angeordnetes Airbag-Modul, der aus zwei etwa kreisförmigen Gewebeabschnitten besteht, die randseitig miteinander verbunden sind, und der in der Mitte eines Gewebeabschnitts eine Gaseinlaß- und Montageöffnung mit Halteblech aufweist, wobei ein von einem topfartigen Unterteil und einem deckelartigen Oberteil begrenztes Aufnahmevolumen vorgegeben ist.

Bei derartigen Faltverfahren geht es einmal darum, das Luftsackgewebe auf das kleinst- mögliche Volumen zu reduzieren, wobei häufig erschwerend hinzukommt, daß der verfügbare Einbauraum nicht kohärent ist, sondern mehr oder weniger zergliedert, weil darin auch andere Teile des Airbag-Moduls untergebracht werden müssen oder weil die Einbauumgebung kein anderes Aufnahmevolumen zuläßt. Ein zweiter wichtiger Aspekt beim Zusammenfalten eines Luftsacks ist das Aufblasverhalten, das durch die Art und Weise der Faltung in gewissen Grenzen beeinflußbar ist. Selbstverständlich darf das explosionsartige Aufblasen des Luftsacks durch die Art der Faltung nicht verhindert oder unzulässig verzögert werden. Andererseits kann man durch die Art und Weise der Faltung Einfluß darauf nehmen, daß der Luftsack sich nicht zu schnell entfaltet oder daß die Entfaltung bevorzugt zunächst quer zur Auftreffrichtung und dann erst in Auftreffrichtung erfolgt.

Schließlich ist zu beachten, daß das Faltverfahren zuverlässig die gewünschte Faltform ergibt, daß es mit möglichst einfachen Vorrichtungen durchführbar ist und innerhalb vertretbarer Fertigungszeiten zu einem fertigen Faltpaket führt.

Der Erfindung liegt die Aufgabe zugrunde, ein Verfahren der eingangs genannten Art vorzuschlagen, bei dem alle genannten Voraussetzungen erfüllt sind und das insbesondere für in Lenkrädern anzuordnende Airbag-Module geeignet ist.

Diese Aufgabe wird erfindungsgemäß durch ein Verfahren gelöst, das gekennzeichnet ist durch folgende Schritte:
(1) die beiden kreisförmigen Gewebeabschnitte werden flach übereinanderliegend so ausgebreitet, daß sie in eine Ebene parallel zum Halteblech liegen,
(2) die links und rechts von einer Mittellinie liegenden Hälften der übereinanderliegenden Gewebeabschnitte werden längs parallel zur Mittellinie verlaufender Faltlinien zu zwei auf der der Gaseinlaßöffnung gegenüberliegenden Seite angeordneten, langgestreckten, unmittelbar nebeneinander liegenden Paketen gefaltet, deren einzelne Faltlagen im wesentlichen die gleiche Höhe aufweisen und senkrecht zum Halteblech angeordnet sind,
(3) die beiden langgestreckten Pakte werden um senkrecht zum Halteblech verlaufende Achsen durch Falten und/oder Wickeln an das Aufnahmevolumen angepaßt.

Das erfindungsgemäße Faltverfahren ist sehr einfach, weil bei dem zickzackförmigen bzw. mäanderförmigen Zusammenfalten längs zueinander paralleler Faltkanten nur darauf geachtet werden muß, daß die einzelnen Faltlagen die gleiche Höhe aufweisen. Da die Faltlagen senkrecht zur Ebene des Halteblechs angeordnet sind, ist es ohne weiteres möglich, die Höhe des fertigen Faltpaketes an die Höhe des verfügbaren Einbauraumes anzupassen. Da dieser Einbauraum bei Airbag-Modulen, die in Lenkräder eingebaut werden, zum Fahrer hin durch eine Abdeckkappe begrenzt ist, die an die Lenkradumgebung angepaßt und zur Betätigung des Hupkontaktes ausgebildet ist, ist es zweckmäßig, wenn die Abdeckkappe im zusammengefalteten Luftsack ein über deren gesamte Fläche wirkendes Widerlager findet, damit sie selbst nicht zu starr und selbsttragend ausgebildet werden muß, wodurch die Entfaltung des Luftsacks behindert werden könnte. Da bei dem erfindungsgemäßen Verfahren die Höhe der Faltlagen frei wählbar ist, kann man die Forderung nach einem verläßlichem Widerlager für die Abdeckkappe auch bei sich ändernden Randbedingungen leicht erfüllen.

Im Vergleich mit parallel zum Halteblech bzw. zur Abdeckkappe angeordneten Faltlagen haben die senkrecht angeordneten Faltlagen außerdem den Vorteil, daß sie ein wesentlich elastischeres Widerlager bilden, was für solche Aufprallsituationen von Vorteil ist, die unterhalb der Ansprechschwelle für das Auslösen des Airbags liegen. Außerdem kann dadurch die erforderliche Beweglichkeit der Abdeckkappe zur Betätigung des Hupkontaktes leichter realisiert werden.

Vorteilhafte Ausgestaltungen der Erfindung sind in den Unteransprüchen 2 bis 7 beschrieben. Weitere Einzelheiten werden anhand der in den Figuren 1 bis 7 dargestellten Ausführungsbeispielen näher erläutert. Es zeigen:
Figur 1 eine Draufsicht und einen Schnitt einer ersten Ausgangsform;
Figur 2 einen Schnitt durch eine erste Faltform;
Figur 3 eine Ansicht der Faltform gemäß Figur 2;
Figur 4 einen Schnitt durch eine zweite Faltform;
Figur 5 eine Ansicht der Faltform gemäß Figur 4;
Figur 6 eine zweite Ausgangsform;
Figur 7 eine dritte Ausgangsform.

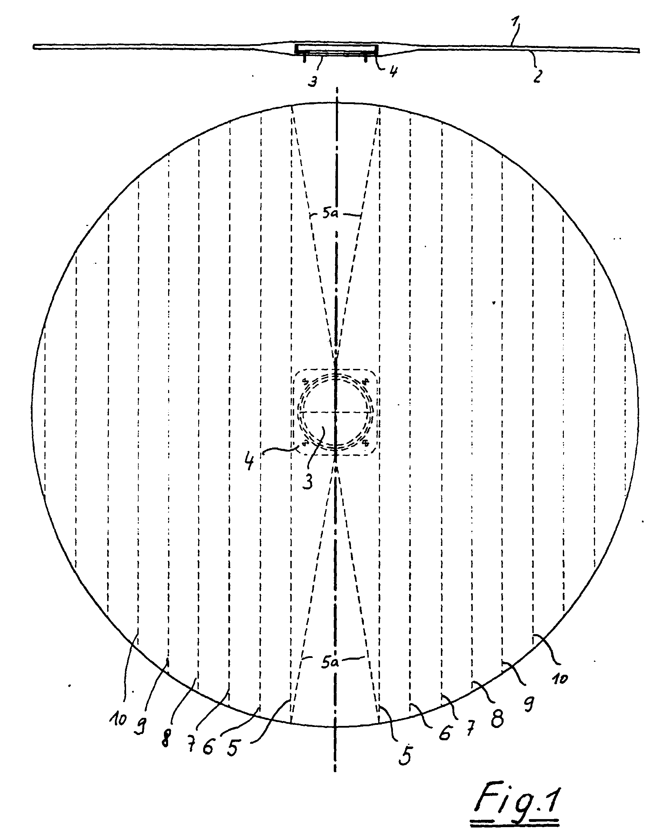

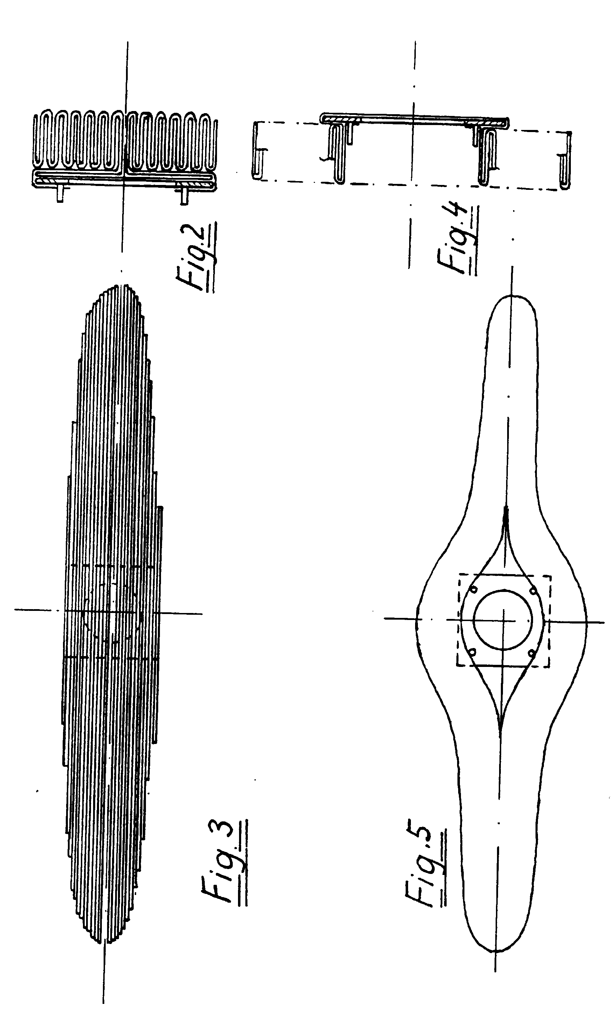

In Figur 1 sind mit 1 und 2 kreisförmige Gewebeabschnitte bezeichnet, die flach übereinander liegen ausgebreitet sind, wobei der Gewebeabschnitt 2 mit der Gaseinlaß- und Montageöffnung 3 unten liegt. Zwischen den beiden kreisförmigen Gewebeabschnitten 1 und 2 ist ein Halteblech 4 angeordnet, das zur Befestigung des Luftsacks im Airbag-Modul dient. Mit 5 bis 10 sind die ersten Faltlinien bezeichnet, die parallel zu einer Mittellinie verlaufen und längs derer das Luftsackgewebe zickzack- bzw. mäanderförmig gefaltet wird. Bei einer Faltform gemäß Figur 4 und 5 wird das Luftsackgewebe oberhalb und unterhalb des Haltebleches 4 außerdem etwa längs der schrägen Faltlinien 5a zusammengelegt.

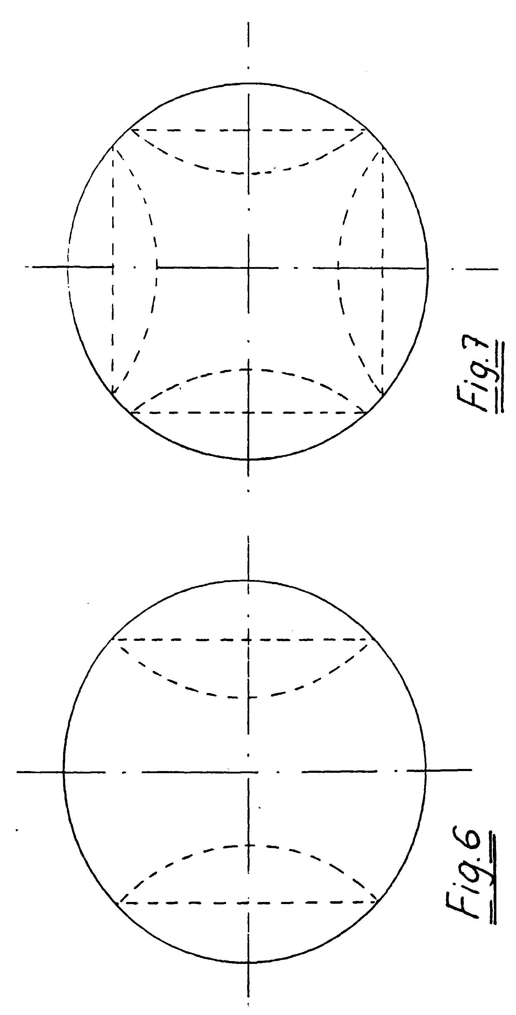

Bei der Faltform gemäß den Figuren 2 und 3 ist das gesamte Gewebematerial auf der der Gaseinlaß- und Montageöffnung 3 gegenüberliegenden Seite des Gassacks angeordnet und über die Breite des Haltebleches 4 in einer Vielzahl von Faltlagen gleicher Höhe zusammengelegt, wobei sämtliche Faltlagen senkrecht zur Ebene des Haltebleches 4 angeordnet sind.

Bei der Faltform gemäß den Figuren 4 und 5 ist das Gewebematerial des Luftsacks hingegen auf der Seite der Gaseinlaß- und Montageöffnung 3 angeordnet, wobei die wiederum senkrecht auf der Ebene des Haltebleches stehenden Faltlagen im Bereich der Gaseinlaß- und Montageöffnung 3 voneinander beabstandet sind und einen Freiraum für die Aufnahme eines Gasgenerators bilden. Es sei noch darauf hingewiesen, daß zur Verdeutlichung des genauen Faltverlaufs die Querabmessungen der Faltlagen vergrößert dargestellt sind.

Die Faltformen gemäß den Figuren 3 und 5 werden anschließend um senkrecht zum Halteblech 4 stehende Achse eingewickelt oder eingefaltet, wodurch das gesamte Faltpaket an das vorhandene Aufnahmevolumen angepaßt wird. Die Höhe der Faltlagen kann bei diesem Verfahren frei gewählt werden, so daß es leicht möglich ist, das fertige Faltpaket an die Höhe des vorhandenen Aufnahmevolumens anzupassen.

Aus den Figuren 6 und 7 sind noch zwei andere mögliche Ausgangsformen ersichtlich, die durch Einstülpen von Randbereichen längs parallel und/oder senkrecht zur Mittellinie verlaufender Faltkanten erreicht werden. Diese Ausgangsformen sind zur Durchführung des erfindungsgemäßen Verfahren ebenso geeignet wie die Ausgangsform gemäß Figur 1. In allen Fällen kann die Höhe der Faltlagen frei gewählt, und es können die Faltpakete gemäß Figur 3 bzw. 5 durch Wickel- oder Faltvorgänge an das vorhandene Aufnahmevolumen angepaßt werden.

Es hat sich herausgestellt, daß die mit dem erfindungsgemäßen Verfahren erreichten Faltformen das explosionsartige Entfalten nicht behindern.

## Patentansprüche

1. Verfahren zum Falten eines Luftsacks für ein im Lenkrad eines Kraftfahrzeuges angeordnetes Airbag-Modul, der aus zwei etwa kreisförmigen Gewebeabschnitten besteht, die randseitig miteinander verbunden sind, und der in der Mitte eines Gewebeabschnitts eine Gaseinlaß- und Montageöffnung mit Halteblech aufweist, wobei ein von einem topfartigen Unterteil und einem deckelartigen Oberteil begrenztes Aufnahmevolumen vorgegeben ist, gekennzeichnet durch folgende Schritte:
(1) die beiden kreisförmigen Gewebeabschnitte werden flach übereinanderliegend so ausgebreitet, daß sie in eine Ebene parallel zum Halteblech liegen,
(2) die links und rechts von einer Mittellinie liegenden Hälften der übereinanderliegenden Gewebeabschnitte werden längs parallel zur Mittellinie verlaufender Faltlinien zu zwei auf der der Gaseinlaßöffnung gegenüberliegenden Seite angeordneten, langgestreckten, unmittelbar nebeneinander liegenden Paketen aufgefaltet, deren einzelne Faltlagen im wesentlichen die gleiche Höhe aufweisen und senkrecht zum Halteblech angeordnet sind,
(3) die beiden langgestreckten Pakte werden um senkrecht zum Halteblech verlaufende Achsen durch Falten und/oder Wickeln an das Aufnahmevolumen angepaßt.

2. Verfahren nach Anspruch 1, jedoch mit der Maßgabe, daß im zweiten Schritt die links und rechts von der Mittellinie liegenden Hälften der übereinanderliegenden Gewebeabschnitte längs parallel zur Mittellinie verlaufender Faltlinien zu zwei auf der Gaseinlaßseite liegenden, langgestreckten Paketen aufgefaltet werden, die im Bereich der Gaseinlaßöffnung voneinander beabstandet sind und einen Freiraum für die Anordnung eines Gasgenerators aufweisen.

3. Verfahren nach Anspruch 1 oder 2, dadurch gekennzeichnet, daß die Pakete im dritten Schritt je für sich gefaltet bzw. gewickelt werden.

4. Verfahren nach Anspruch 1 oder 2, dadurch gekennzeichnet, daß die Pakete im dritten Schritt gemeinsam gefaltet bzw. gewickelt werden.

5. Verfahren nach einem der Ansprüche 1 bis 4, dadurch gekennzeichnet, daß vor dem ersten Schritt die außenliegenden Gewebeabschnitte parallel zur Mittellinie eingestülpt werden, so daß eine Ausgangsform mit zwei zueinander parallelen, geraden Rändern und dazwischenliegenden Rändern in Form von Kreisbogenabschnitten entsteht.

6. Verfahren nach einem der Ansprüche 1 bis 4, dadurch gekennzeichnet, daß vor dem ersten Schritt die außenliegenden Gewebeabschnitte parallel und senkrecht zur Mittellinie eingestülpt werden, so daß eine im wesentlichen quadratische Ausgangsform entsteht.

7. Verfahren nach Anspruch 5 oder 6, dadurch gekennzeichnet, daß die eingestülpten Bereiche ein- oder mehrfach bis zur jeweils vorausgehenden Stülpkante zurückgestülpt werden.
